# EUROPEAN PATENT APPLICATION

(11) **EP 3 093 071 A1**
(43) Date of publication of application: **16.11.2016**
(21) Application number: 15167148.4
(22) Date of filing: 11.05.2015
(51) Int. Cl.: B01L 9/06, G01N 35/04

(54) **TEST TUBE CARRIER**

(71) Applicant: Roche Diagnostics GmbH, 68305 Mannheim (DE); F. Hoffmann-La Roche AG, 4070 Basel (CH)
(72) Inventor: Malinowski, Michal, 71522 Backnang (DE)
(74) Representative: Patentanwälte Ruff, Wilhelm, Beier, Dauster & Partner mbB

(57) **Abstract**

The invention relates to a test tube carrier 1 for transporting test tubes in a laboratory automation system comprising a base body (2) and at least three centering fingers (3) attached to the base body (2), wherein the centering fingers (3) are distributed about a central axis (A), wherein each centering finger (3) comprises an elongate, bent resilient element (30) and a strut (32) having a higher stiffness than the resilient element (30), wherein the struts (32) extend in parallel to the central axis (A), and wherein a first end (300) of the associated resilient element (30) is fixedly attached to the strut (32) at an upper position (320) of and a second end (302) of the resilient element (30) contacts the strut (32) at a lower position between the base body (2) and the upper position (320).

The invention further relates to a laboratory distribution system having a number of test tube carriers, and a laboratory automation system comprising a laboratory distribution system.

## Description

### TECHNICAL FIELD

The invention relates to a test tube carrier for transporting test tubes in a laboratory automation system. The invention further relates to a laboratory distribution system having a number of test tube carriers, and a laboratory automation system comprising a laboratory distribution system.

A laboratory automation system comprises a number of pre-analytical, analytical and/or post-analytical stations, in which samples, for example blood, saliva, swab and other specimens taken from the human body, are processed. It is generally known to provide test tubes containing the samples. The test tubes are also referred to as sample tubes.

Several test tubes can be placed in so-called racks for a handling. In an alternative distribution system, test tubes are place in an upright or vertical position in so called test tube carriers or pucks having a retaining area for retaining test tubes. Test tube carriers are disclosed among others in US 6,274,092 B1, US 6,971,506 B2, US 7,485,264 B2, US 8,147,778 B2 and EP0916406A2.

Generally, in laboratory automation systems different kinds of test tubes, in particular test tubes of different diameter are handled. It is further known to control the transport of the test tubes and/or a treatment of the sample contained in the test tube by means of a bar code provided on an outside surface of the test tube. For this purpose, the bar code should be readable during the transport and/or at all handling stations without the necessity to remove the test tube from the carrier.

### SUMMARY OF THE INVENTION

It is an object of the present invention to provide a test tube carrier allowing for a secure support of different types of test tubes without hindering a readability of the bar code or any other type of identification code provided on an outside of the tube. It is a further object of the present invention to provide a laboratory distribution system and a laboratory automation system comprising a distribution system having a number of test tube carriers.

According to a first aspect of the invention, a test tube carrier for transporting test tubes in a laboratory automation system comprising a base body; and at least three centering fingers attached to the base body is provided, wherein the centering fingers are distributed about a central axis, wherein each centering finger comprises an elongate, bent resilient element and a strut having a higher stiffness than the resilient element, wherein the struts extend in parallel to the central axis, and wherein a first end of the associated resilient element is fixedly attached to the strut at an upper position and a second end of the resilient element contacts the strut at a lower position between the base body and the upper position.

The base body preferably is adapted to a distribution system allowing the test tube carrier to be moved between different stations, for example by means of a conveyer belt, an assigned drive motor and/or a system as described in WO 2013/064656 A1 using a magnetically active device assigned to the carrier.

The resilient elements are attached with a first end to the struts at an upper position. In one embodiment, the upper position coincides to the upper end of the struts. In other embodiments, the struts extend beyond the upper position. The second end of the resilient element contacts the associated strut at a position that is lower than the upper position. The resilient element is bent such that a region of the resilient element between the first and the second end protrudes towards the central axis.

When receiving a test tube between the centering fingers, the resilient elements are deformed and the test tubes are aligned with the central axis and clamped by the restoring forces. In use, different types of test tubes, in particular test tubes of different diameters are transported by means of the test tube carrier. The resilient elements allow for a compensation of different sizes. The struts having a higher stiffness than the resilient elements are not deformed when receiving a test tube and prevent a permanent deformation of the centering fingers radially outwards. The resilient elements are supported at the stiff struts at both ends allowing for a reliable guiding and alignment of the test tube when inserting the test tube as well as for a reliable restoration after removal of the test tube. A reliable restoration is ensured even when holding test tubes having a larger diameter. Hence, a subsequent test tube having a smaller diameter can be retained without play.

The centering fingers preferably are evenly distributed about a circumference of a retaining area. The bar code or other identification means provided at the outside of the tube remain readable by humans or machines. The centering fingers, in particular the resilient elements of the centering fingers of one test tube carrier in one embodiment differ in design. In preferred embodiments, all centering fingers are identical in design within tolerances and the centering fingers are evenly distributed in order to ensure a reliable centering of the test tubes.

In one embodiment, the second end of at least one of the resilient elements is in sliding contact with the associated strut at the lower position. Depending on the shape of the resilient element, when receiving a test tube, the second end of the resilient element slides upwards or downwards along the strut.

In alternative or in addition, at least one of the resilient elements is fixedly attached to the associated strut at the lower position. When attaching the resilient elements at both ends to the strut, guiding of the test tubes upon an insertion between the centering fingers is enhanced.

The material of the elongate, bent resilient element is chosen suitable for allowing repeatable deformation and sufficient restoration forces. In one embodiment, the resilient element is in the form of a wire.

In preferred embodiments, the resilient elements are in the form of resilient metal band. Suitable materials are metals such as stainless steel, brass, bronze, spring steel or other similar resilient metals. The resilient metal band is bent to contact with its two ends the strut and to protrude from the strut towards the central axis. In one embodiment, the resilient metal band is bent into an arc or bracket.

In preferred embodiments, at least one, preferably all of the resilient metal bands is/are bent to form an at least essentially U-shaped member having a base extending in parallel to the central axis for contacting the received test tube. The U-shaped member has two legs and the base arranged between the legs, so that the resilient element and the strut form a trapezoid, in preferred embodiments a parallelogram. When inserting the test tube, an angle between the legs and the base as well as between the legs and the strut will change and the height of the trapezoid or parallelogram perpendicular to the strut is decreased. In case both legs are fixedly attached to the strut, the legs are swiveled in the same angular direction. In case the second end is in sliding contact, embodiments are conceivable, in which the legs are swiveled in opposite directions upon receiving the test tube.

In preferred embodiments, the U-shaped member comprises a first leg attached to the upper of the associated strut, wherein the strut and the first leg form an acute angle. In other words, the first leg extends from the strut toward the central axis and towards the base body. When arranging the first leg at an acute angle, the first legs form an insertion aid for the test tubes causing pre-alignment of the test tubes with the central axis.

As mentioned above, the legs, the base and the strut form a trapezoid. In preferred embodiments, the U-shaped member comprises a second leg extending in parallel to the first leg. In other words, the legs, the base and the strut form a parallelogram, wherein both legs are swiveled towards the strut upon the insertion of a test tube.

In one embodiment, the base of the U-shaped member is bent to form at least two distinct contact portions. Thereby, a total length of a contact region between the test tube and the base is decreased.

In one embodiment, the test tubes are placed on a flat base body and retained only by means of the centering fingers. In preferred embodiments, the base body has a recess, in particular a chamfered recess adapted for accommodating a bottom of a test tube. The size or depth of the recess and an orientation of the walls of the recess are chosen to allow for an accommodation of different types of test tubes without hindering a readability of the bar code or any other type of identification code provided on an outside of the test tube.

In one embodiment, the struts are fixedly attached to the base body, in particular soldered, welded, or clued to the base body. In preferred embodiments, at least one of the struts is releasably attached to base body. Hence, the central fingers can be replaced if worn-out, without the necessity to replace the base body. In particular, in preferred embodiments, a plug-in connection is provided, wherein the struts are inserted into receiving openings extending in the axial direction of the struts. The ends of the struts inserted into the receiving openings and the receiving openings in one embodiment do not have rotation symmetry to ensure an insertion of the struts with a suitable orientation.

According to a second aspect, a laboratory distribution system is provided having a number of test tube carriers. The laboratory distribution system in one embodiment comprises a transport device with a transport plane adapted to carry said number of test tube carriers, wherein the carriers each comprise at least one magnetically active device and wherein the transport device comprises a number of electro-magnetic actuators, said electromagnetic actuators being stationary arranged below said transport plane and being adapted to move a test tube carrier placed on top of said transport plane by applying a magnetic force to said test tube carrier. However, the invention is not limited to such a laboratory distribution system. In other embodiments, for example a conveyer belt or guiding rails are provided for moving the test tube carriers. In still another embodiment, each test tube carrier is provided with a drive motor.

According to a third aspect, a laboratory automation system with a number of pre-analytical, analytical and/or post-analytical stations, and with a distribution system having a number of test tube carriers is provided.

### BRIEF DESCRIPTION OF THE DRAWINGS

- Fig. 1:: A top view of an embodiment of a test tube carrier.
- Fig. 2:: A sectional view of the test tube carrier of Fig. 1 along a line II-II.
- Fig. 3:: A detail III of Fig. 2.
- Fig. 4:: A detail of a second embodiment of a test tube carrier similar to Fig. 3.
- Fig. 5:: A sectional view of a third embodiment of a test tube carrier similar to Fig. 2.
- Fig. 6:: A perspective view of a laboratory distribution system comprising a number of test tube carriers.

### DETAILED DESCRIPTION

In the following, embodiments of the invention will be described in detail with reference to the drawings. Wherever possible, the same reference numbers are used throughout the drawings to refer to the same or like parts.

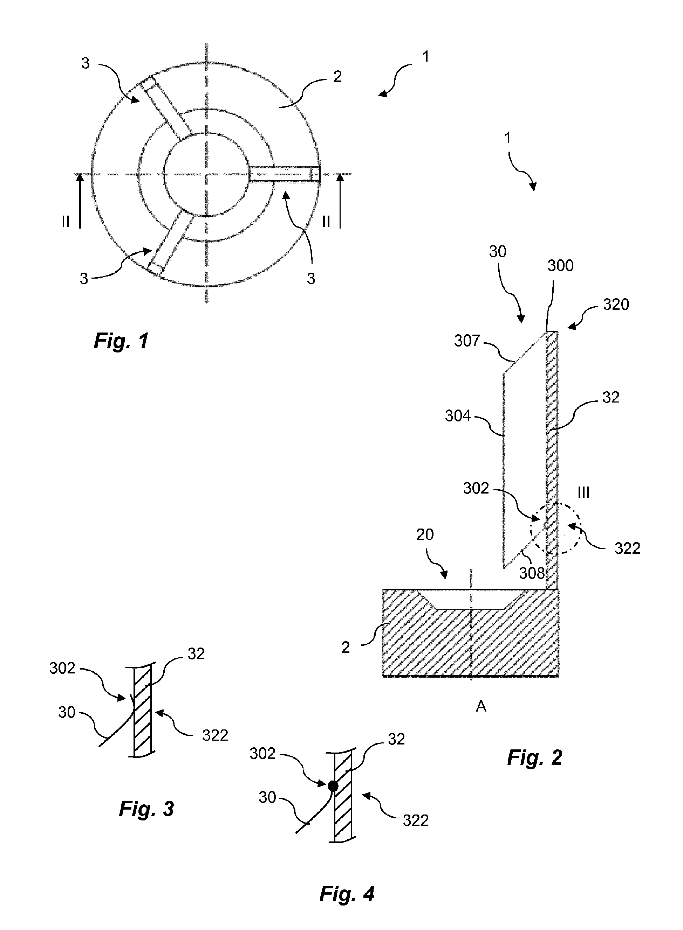

Figs. 1 and 2 show a top view and a sectional view of a first embodiment of a test tube carrier 1 for transporting test tubes (not shown in Figs. 1 and 2) in a laboratory distribution system of a laboratory automation system.

The test tube carrier 1 comprises a base body 2 and three centering fingers 3 attached to the base body 2. The three centering fingers 3 are evenly distributed about a central axis A. In other embodiments more than three centering fingers 3 are provided, for example four or five centering fingers 3. In the embodiment shown, the base body 2 has a circular cylindrical shape, which is concentric to the central axis A. However, this shape is to be understood only as an example, other shapes are conceivable, wherein the base body is adapted to the requirements of a laboratory distribution system.

The base body 2 has a chamfered recess 20, which is concentric to the central axis A and adapted for accommodating a bottom of a test tube.

The centering fingers 3 each comprise an elongate, bent resilient element 30 and a strut 32, wherein due to material differences and/or due to a shape, the strut 32 has a higher stiffness than the resilient elements 30.

The three struts 32 each extend in parallel to the central axis A. A connection of the struts 32 to the base body 2 is depicted only diagrammatically. A suitable connection can be chosen by the person skilled in the art, wherein preferably the struts 32 are releasably attached to the base body 2 allowing a replacement of the struts 32 in case the centering fingers 3 are worn-out.

In the embodiment shown, the resilient elements 30 are in the form of bent resilient metal bands, in particular bent spring steel bands. A first end 300 of the resilient metal band is fixedly attached to the strut 32 at an upper position 320, which upper position 320 coincides with the upper end of the strut 32. A second end 302 of the resilient metal band contacts the strut 32 at a lower position 322, which lower position 322 is situated between the base body 2 and the upper position 320.

The struts 32 are arranged outside of a retaining area for the test tubes and the resilient elements 30 protrude from the struts 32 towards the central axis A and into the retaining area for the test tubes.

In the embodiment shown, the resilient metal bands provided as the resilient elements 30 are bent to form an at least essentially U-shaped member having base 304, a first leg 307 and a second leg 308, each.

The base 304 of each of the U-shaped members extends in parallel to the central axis A for contacting the received test tube (not shown). The first legs 307 of each of the U-shaped members is attached to the strut 32 at the upper position 320, wherein the strut 32 and the first leg 307 form an acute angle. Thereby, the first legs 307 function as an insertion aid for a pre-alignment of the test tubes.

In the embodiment shown, the second leg 308 extends at least essentially in parallel to the first leg 307, wherein a free end of the second leg 308 contacts the strut 32 at the lower position 322.

Fig. 3 shows a detail III of Fig. 2. As can be seen in Fig. 3, in the embodiment shown in Figs. 1 to 3, the second ends 302 of the resilient elements 30, more particular of the second legs 308, are in sliding contact with the associated strut 32 at the lower position 322.

Fig. 4 shows a detail of a second embodiment of a test tube carrier similar to Fig. 3. The test tube carrier according to the second embodiment in large parts corresponds to test tube carrier shown in Figs. 1 to 3. In contrast to the embodiment shown in Fig. 3, the second end 302 of the resilient element 30 shown, preferably of all resilient elements, are fixedly attached to the associated strut 32 at the lower position 322.

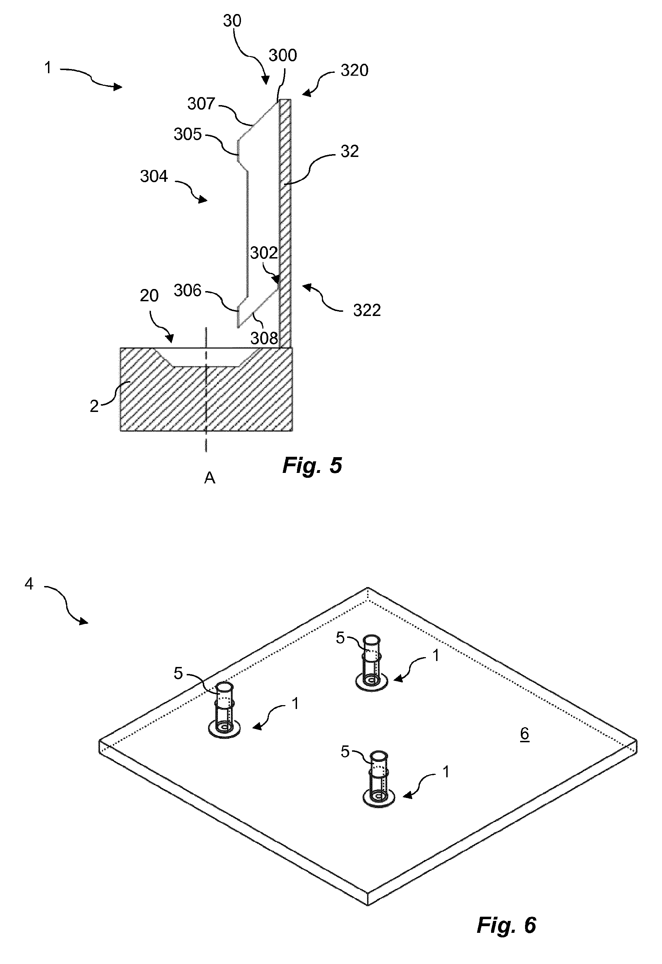

Fig. 5 shows a sectional view of a third embodiment of a test tube carrier 1 similar to Fig. 2. The test tube carrier 1 according to the second embodiment in large parts corresponds to test tube carrier 1 shown in Figs. 1 to 3 or 4 and for a detailed description, reference is made to the above description. In contrast to the embodiments described above, the base 304 of the U-shaped member is bent to form at least two distinct contact portions 305, 306, contacting the received test tube (not shown) at two distinct areas.

Fig. 6 shows a perspective view of a laboratory distribution system 4 comprising a number of test tube carriers 1 and a transport device with a transport plane 6 adapted to carry the number of test tube carriers 1. Test tubes 5 are received by the test tube carriers 1 and moved over the transport plane 6 to a desired destination.

## Claims

1. Test tube carrier for transporting test tubes (5) in a laboratory automation system comprising:
- a base body (2) and
- at least three centering fingers (3) attached to the base body (2), wherein the centering fingers (3) are distributed about a central axis (A), and wherein each centering finger (3) comprises an elongate, bent resilient element (30),
**characterized in that** each centering finger (3) comprises a strut (32) having a higher stiffness than the resilient element (30), wherein the strut (32) extends in parallel to the central axis (A), and wherein a first end (300) of the associated resilient element (30) is fixedly attached to the strut (32) at an upper position (320) of and a second end (302) of the resilient element (30) contacts the strut (32) at a lower position between the base body (2) and the upper position (320).

2. Test tube carrier according to claim 1, **characterized in that** the second end (302) of at least one of the resilient elements (30) is in sliding contact with the associated strut (32) at the lower position (322).

3. Test tube carrier according to claim 1 or 2, **characterized in that** the second end (302) of at least one of the resilient elements (30) is fixedly attached to the associated strut (32) at the lower position (322).

4. Test tube carrier according to claim 1, 2 or 3, **characterized in that** the resilient elements (30) are in the form of resilient metal band.

5. Test tube carrier according to claim 4, **characterized in that** at least one of the resilient metal bands (30) is bent to form an at least essentially U-shaped member having base (304) extending in parallel to the central axis (A) for contacting the received test tube (5).

6. Test tube carrier according to claim 5, **characterized in that** the U-shaped member comprises a first leg (307) attached to the upper of the associated strut, wherein the strut and the first leg form an acute angle.

7. Test tube carrier according to claim 6, **characterized in that** the U-shaped member comprises a second leg (308) extending in parallel to the first leg (307).

8. Test tube carrier according to claim 5, 6 or 7, **characterized in that** the base (304) of the U-shaped member is bent to form at least two distinct contact portions (305, 306).

9. Test tube carrier according to any one of claims 1 to 8, **characterized in that** the base body (2) has a recess (20) adapted for accommodating a bottom of a test tube (5).

10. Test tube carrier according to any one of claims 1 to 9, **characterized in that** at least one of the struts (32) is releasably attached to the base body (2).

11. Laboratory distribution system having a number of test tube carriers (1) according to any one of claims 1 to 10.

12. Laboratory automation system with a number of pre-analytical, analytical and/or post-analytical stations, and with a distribution system (4) according to claim 11.
